# EUROPÄISCHE PATENTSCHRIFT

(11) **EP 3 623 178 B1**
(45) Veröffentlichungstag und Bekanntmachung des Hinweises auf die Patenterteilung: **21.10.2020**
(21) Anmeldenummer: 19196792.6
(22) Anmeldetag: 11.09.2019
(51) Int. Cl.: B60C 23/00, B60B 35/00

(54) **REIFENDRUCKREGELANLAGE MIT DRUCKLUFTVERSORGUNG DURCH EINE IM INNEREN EINES STARREN ACHSKÖRPERS AUSGEBILDETE DRUCKLUFTLEITUNG**
TYRE PRESSURE REGULATING SYSTEM WITH COMPRESSED AIR SUPPLY THROUGH A COMPRESSED AIR LINE IN THE INSIDE OF A RIGID AXLE BODY
INSTALLATION DE RÉGLAGE DE PRESSION DE PNEUS EN AIR COMPRIMÉ AU MOYEN D'UNE CONDUITE D'AIR COMPRIMÉ FORMÉE À L'INTÉRIEUR D'UN CORPS D'ESSIEU RIGIDE

(30) Priorität: 13.09.2018 DE 102018122413
(43) Veröffentlichungstag der Anmeldung: 18.03.2020
(73) Patentinhaber: Gigant-Trenkamp & Gehle GmbH, 49413 Dinklage (DE)
(72) Erfinder: Kühr, Kai, 49413 Dinklage (DE); Wodtke, Melanie, 49406 Eydelstedt (DE)
(74) Vertreter: Weeg, Thomas

(56) Entgegenhaltungen:
- WO-A1-2017/174646
- US-A- 4 702 843
- US-A1- 2018 222 258

## Beschreibung

Die vorliegende Erfindung bezieht sich auf eine Achsanordnung mit einer Reifendruckregelanlage, deren Versorgungsleitung für die Druckluftversorgung durch eine im Inneren eines starren Achskörpers ausgebildete Druckluftleitung verläuft.

Eine gattungsgemäße Achsanordnung ist aus der Schrift DE 10 2006 021 712 A1 bekannt. In dieser Schrift ist offenbart, dass die Druckluft durch einen Achsstummel hindurch von einer fahrzeugseitigen Druckquelle aus nach außen in Richtung der Felge und des Reifens geführt werden kann. Der Achsstummel ist in zwei beabstandet zueinander angeordneten Radlagern gelagert. Der Zwischenraum zwischen den Radlagern wird zur Übertragung von Druckluft genutzt, die von außen über eine den Zwischenraum angeschlossene Leitung von einer Druckquelle aus herangeführt wird. Als Druckquelle kommt beispielsweise ein auf dem betreffenden Fahrzeug installierter oder sonstiger externer Druckluftkompressor in Betracht.

Es ist zwar vorteilhaft, die Druckluft durch den Achsstummel hindurch in Richtung des Reifens zu leiten, es ist aber schwierig, die Zuführung der Druckluft zum Achsstummel hin so zu gestalten, dass sich eine einfache Montage und ein dauerhaft zuverlässiger Betrieb ergeben. Die in der Schrift DE 10 2006 021 712 A1 offenbarte Lösung ist praktisch nicht einsetzbar, weil die Druckluft im Zwischenraum das Lagerfett aus den Lagern der Radlager drückt, die Radlager dadurch allmählich trockenlaufen und dadurch einem erhöhten Verschleiß unterliegen, bis sie ganz versagen.

In der Schrift DE 20 2013 105 026 U1 ist eine Reifendruckregelanlage offenbart, bei der die Drehdurchführungen zur Zuleitung der Druckluft in den Reifen auf der Außenseite der jeweiligen Räder angeordnet sind. Nun ist es aber so, dass die Breite eines Fahrzeugs vom Gesetzgeber vorgegebene Maximalwerte nicht überschreiten darf. Die Fahrzeuge sind häufig zugunsten des nutzbaren Laderaums für sich bereits so breit, dass am Fahrzeug keine weiteren Komponenten mehr angebaut werden können, ohne die maximal zulässigen Grenzwerte zu überschreiten.

Es ist die Aufgabe der vorliegenden Erfindung, eine Achsanordnung zu schaffen, bei der die Zuleitung der Druckluft durch den Achsstummel hindurch erfolgt, wobei die Fahrzeugbreite durch die Druckluftführung nicht vergrößert wird, die Komponenten kostengünstig herstellbar sind und ein dauerhaft zuverlässiger Betrieb möglich ist.

Die Aufgabe wird gelöst, indem der Achskörper als ein in einer schwingenseitigen Achsaufnahme mit einer Achsschwinge drehfest verpresster Achsstummel ausgebildet ist, in der Achsschwinge und im Achsstummel jeweilige in der Montageposition des Achsstummels in der Achsaufnahme miteinander verbundene Bohrungen vorhanden sind, die als eine Druckluftzuleitung durch den Achskörper hindurch von einem schwingenseitigen Anschluss bis zu einer Mündungsöffnung im Achsstummel dienen, wobei der Verbindungsbereich der Bohrungen als eine in der Höhe der Mündungsöffnungen der Bohrungen befindliche und sich zumindest teilweise in Umfangsrichtung um den Außenumfang des Achsstummels erstreckende Nut ausgebildet ist, die die Mündungsöffnungen der Bohrungen in der Achsschwinge und im Achsstummel miteinander verbindet.

Die erfindungsgemäße Ausgestaltung der Druckluftführung ermöglicht eine raumsparende, leicht und kostengünstig herstellbare und dauerhaft zuverlässige Lösung. Der Achsstummel und die Schwinge können im Bereich der Achsaufnahme so passgenau vorgefertigt werden, dass sich nach dem Verpressen der beiden Bauteile miteinander ein ausreichend fester klemmender Sitz des Achsstummels in der Achsaufnahme in der Achsschwinge ergibt. Dieser Presssitz des Achsstummels in der Achsaufnahme ist auch hinreichend gasdicht, um die Druckluft ohne einen oder nur mit einem geringem Druckverlust von Anschluss der Zuleitung an der Achsschwinge bis an die Mündungsöffnung der Bohrung im Achsstummel zu leiten.

Wenn die Achsschwinge und der Achsstummel erst miteinander verpresst werden, nachdem die Bohrungen und die Nut in die Bauteile eingebracht worden sind, können diese Bauteile vorher leicht und schnell bearbeitet werden. So können die Bohrungen in die Bauteile eingebracht werden, und auch die Nut kann aus dem Material der Bauteile ausgefräst werden.

Die einander zugewandten Mündungsöffnungen der Bohrungen im Achsstummel und in der Achsschwinge werden durch eine in der Montageposition in ihrer Höhe befindliche und sich zumindest teilweise in Umfangsrichtung um den Außenumfang des Achsstummels erstreckende Nut miteinander verbunden. Die Nut bildet einen Verbindungskanal, durch den die Druckluft aus der Bohrung in der Achsschwinge in die Bohrung im Achsstummel strömen kann. Sie ist deshalb so angelegt, dass sie von ihrer Lage und Ausrichtung her die Mündungsöffnungen der Bauteile im Bereich der Achsaufnahme in der Montageposition der Bauteile miteinander verbindet. Der Verbindungskanal ermöglicht es durch seine Erstreckung in Umfangsrichtung um den Außenumfang des Achsstummels, einen entsprechenden Winkelversatz zwischen den Mündungsöffnungen der Bohrungen zu überbrücken, wenn der Achsstummel nicht genau in einer Winkellage in der Achsaufnahme verpresst wird, in der die Mündungsöffnungen direkt aufeinander zu liegen kommen. Je nach Länge, in die sich die Nut in Umfangsrichtung erstreckt, können geringere oder größere Winkelversatze ausgeglichen werden. Es ist nicht mehr erforderlich, den Achsstummel und die Achsschwinge bei der Montage genau so auszurichten, dass die Mündungsöffnungen der Bohrungen nach dem Verpressen der Bauteile genau aufeinander zu liegen kommen. Es genügt vielmehr eine ungefähre Ausrichtung, bei der Winkelversätze zwischen diesen beiden Bauteilen über die Nut ausgeglichen werden.

Genauso ist es möglich, über die Nut einen eventuellen Längenversatz in axialer Richtung des Achsstummels auszugleichen. Wenn die Nut so breit ausgeführt ist, dass sie auch einen Längenversatz in axialer Richtung überbrückt, kann die Druckluft immer noch von der Bohrung in der Achsschwinge in die Bohrung im Achsstummel strömen, auch wenn der Achsstummel nicht genau so weit in die Achsaufnahme eingepresst worden ist, dass die Mündungsöffnungen in axialer Richtung auf einer gemeinsamen Höhe liegen. Auch hierdurch wird die Montage vereinfacht und die Ausschussquote in der Fertigung gesenkt.

Die Bohrung durch die Schwinge kann so angelegt sein, dass sie sich auch über einen größeren Längenabschnitt der Schwinge beispielsweise entlang ihrer Längserstreckung erstreckt. Dadurch ist es möglich, die Zuleitung für die Druckluft in einem Bereich außerhalb der Reifenflanken an die Achsschwinge anzuschließen. Der regelmäßig sehr schmale Bauraum zwischen den auf der zum Rahmen weisenden Innenseite der Reifen befindlichen Reifenflanken und dem Rahmen des Fahrzeugs kann dadurch von Leitungsführungen für die Druckluft frei und schmal wie ohne eine gesonderte Druckluftführung gehalten werden. Je nach Bauart der Fahrzeuge können sich in diesem Bereich auch thermische Probleme ergeben, die eine Druckluftführung per Schlauch kritisch erscheinen lassen. Hier ist die Druckluftführung durch die Schwinge hindurch technisch überzeugender.

Auf verschleißanfällige Drehdurchführungen kann bei der einmaligen Verpressung der Bauteile des Achskörpers verzichtet werden. Die im Achskörper geführte Druckluftleitung ist zudem gut gegen Fremdkörper, Schmutz und Anfahrschäden geschützt.

Nach einer Ausgestaltung der Erfindung befindet sich die Nut in der nach innen weisenden Oberfläche der Achsaufnahme und/oder in der nach außen weisenden Umfangsfläche des Achsstummels. Vor dem Zusammenpressen dieser beiden Bauteile kann eine Nut gut in der Oberfläche des jeweiligen Bauteils ausgefräst werden, wobei das bei dem Achsstummel noch einfacher ist, weil die Außenumfangsfläche leichter zugänglich ist.

Nach einer Ausgestaltung der Erfindung ist die Nut als umlaufende Ringnut ausgebildet. Bei einer Ringnut ist es vor dem Verpressen der Bauteile nicht mehr erforderlich, diese in ihrer Rotationslage zueinander auszurichten. Da die Ringnut um einen Vollkreis umläuft, sind die Mündungsöffnungen der Bohrungen nach dem Verpressen des Achsstummels in jedem Fall miteinander verbunden.

Nach einer Ausgestaltung der Erfindung verläuft die Bohrung im Achsstummel in einem ersten Abschnitt parallel zur axialen Richtung des Achsstummels und in einem zweiten Abschnitt quer zur axialen Richtung, wobei das zuströmungsseitige Ende des zweiten Abschnitts in der Nut mündet. Der Druckluftkanal im Achsstummel kann auf diese Weise durch zwei einfach auszuführende gerade Bohrungen hergestellt werden.

Nach einer Ausgestaltung der Erfindung ist der zweite Abschnitt der Bohrung außerhalb der Lastzone des Achsstummels angeordnet. Im Übergangsbereich vom Achsstummel zur Achsschwinge wirken Kerbkräfte auf den Achsstummel ein, durch die dieser statisch hoch belastet ist. Diese Zone des Achsstummels stellt die Lastzone dar, in der eine Bohrung die statische Festigkeit des Achsstummels schwächen würde. Um eine Schwächung des Achsstummels zu vermeiden, ist es vorteilhaft, den zweiten Abschnitt der Bohrung in einem Bereich außerhalb der Lastzone anzuordnen, beispielsweise im Bereich der Achsaufnahme, in der der Achsstummel bevorzugt ganz oder überwiegend von der Achsaufnahme umschlossen ist.

Nach einer Ausgestaltung der Erfindung ist in der Achsaufnahme und/oder dem Achsstummel ein stufenförmiger Absatz ausgebildet, gegen den der Achsstummel in der Achsaufnahme verpresst ist. Der Absatz bildet einen Anschlag, der sicherstellt, dass die Mündungsöffnungen nach dem Verpressen des Achsstummels in einer passenden Lage in axialer Richtung und auch im Verhältnis zur Nut zueinander liegen.

Nach einer Ausgestaltung der Erfindung ist die Achsanordnung gemäß einem der vorstehenden Ansprüche Bestandteil einer Trailerachse. Die vorstehenden Ausgestaltungen der Erfindung eignen sich besonders für die Anwendung in Trailerachsen, weil die Trailer besonders bauraumoptimiert sind. Im professionellen täglichen Einsatz unter teilweise schwierigen Einsatzbedingungen müssen die darin verbauten Komponenten auch besonders ausfallsicher und hoch belastbar gebaut werden. Einzelne Trailer für bestimmte Anwendungen sind mit Reifendruckregelanlagen ausgestattet, um empfindliche oder gefährliche Güter unter allen Bedingungen ohne Bruchschäden transportieren zu können.

Weitere Merkmale der Erfindung ergeben sich aus den Ansprüchen, den Figuren und der gegenständlichen Beschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert. Es zeigen:
- Fig. 1:: eine Ansicht von schräg oben auf eine Achsanordnung, und
- Fig. 2:: eine Schnittansicht durch die in Fig. 1 gezeigte Achsanordnung.

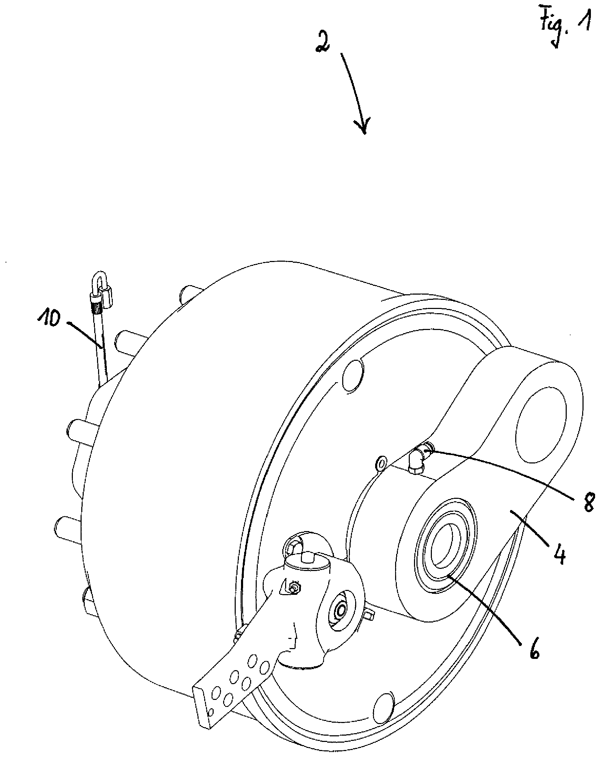

In Fig. 1 ist eine Ansicht von schräg oben auf eine Achsanordnung 2 gezeigt. In der Ansicht ist gut die Achsschwinge 4 erkennbar, die mit dem freien Auge am Rahmen eines Fahrzeugs wie beispielsweise einem Trailer befestigt werden kann. In der Achsschwinge 4 ist das stirnseitige Ende des Achsstummels 6 erkennbar, der in seiner Einbaulage über eine Presspassung in die Achsschwinge 4 eingepresst ist.

An der Achsschwinge 4 befindet sich ein Anschluss 8, an den eine Druckleitung zur Zuführung von Druckluft angeschlossen werden kann. Im Ausführungsbeispiel befindet sich der Anschluss 8 direkt oberhalb des Achsstummels 6, vom Ausführungsbeispiel abweichend kann der Anschluss 8 aber auch an einer anderen Stelle der Achsschwinge 4 angeordnet sein.

Die über den Anschluss 8 zugeführte Druckluft wird durch die Achsschwinge 4 und den Achsstummel 6 zur gegenüberliegenden Seite der Achsanordnung 2 geführt, wo die Druckluft über den Druckschlauch 10 zu einem mit der Druckluft zu beaufschlagenden Reifen geführt wird.

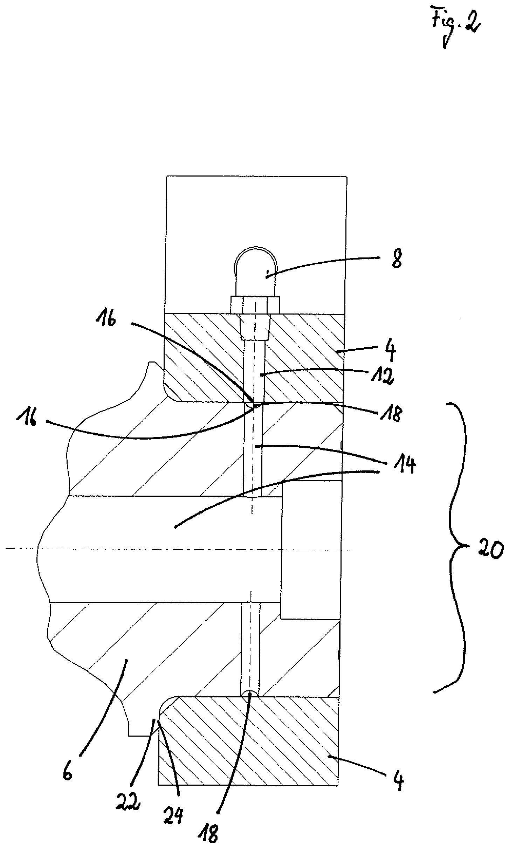

In Fig. 2 ist eine Schnittansicht durch die in Fig. 1 gezeigte Achsanordnung 2 gezeigt. In der Schnittansicht ist die Bohrung 12 erkennbar, die in die Achsschwinge 4 eingebracht ist, sowie die Bohrung 14, die durch den Achsstummel 6 geführt ist. Die Bohrung 14 im Achsstummel 6 ist zweiteilig, und zwar mit einem ersten Abschnitt, der sich entlang der Längsachse des Achsstummels 6 erstreckt, sowie einem zweiten Abschnitt, der sich in einer Richtung quer zur Längsachse des Achsstummels 6 erstreckt. Die beiden Bohrungen 12, 14 haben einander zugewandte Mündungsöffnungen 16. In Fig. 2 liegen diese beiden Mündungsöffnungen 16 in der Schnittansicht nun genau gegenüber. Erfindungsgemäß ist das allerdings nicht zwingend erforderlich. Vielmehr befindet sich zwischen den beiden Mündungsöffnungen 16 eine Nut 18, die im Ausführungsbeispiel als eine umlaufende Ringnut ausgebildet ist. Wenn der Achsstummel 6 also in einer anderen Winkellage mit der Achsschwinge 4 verpresst wird, als das in Fig. 2 gezeigt ist, kann die in die Bohrung 12 einströmende Druckluft durch die Mündungsöffnung der Bohrung 12 und die Nut 18 zur Mündungsöffnung 16 der Bohrung 14 gelangen, von wo aus die Druckluft dann die gesamte Länge der Bohrung 14 durchströmen kann, um zur Leitung 10 zu gelangen.

In der Schnittansicht ist erkennbar, dass sich die Bohrungen 12, 14 auf derselben Höhe bezogen auf die Längsachse des Achsstummels 6 befinden, so dass eine ebenfalls rechtwinklig zur Längsachse des Achsstummels 6 ausgeführte Nut die beiden Mündungsöffnungen 16 miteinander verbindet. Die passende räumliche Lage der Mündungsöffnungen 16 zueinander sowie zur Nut 18 kann sichergestellt werden, indem an dem Achsstummel 6 ein Absatz 22 ausgebildet ist, der bei der Verpressung des Achsstummels 6 mit der Achsschwinge 4 in der Montageposition gegen einen Anschlag schlägt. In der Schnittzeichnung ist erkennbar, dass der Achsstummel 6 seine gewünschte Montagestellung in der Achsaufnahme 20 eingenommen hat.

Die Erfindung ist nicht auf das vorstehend beschriebene Ausführungsbeispiel beschränkt. Dem Fachmann bereitet es keine Schwierigkeiten, das Ausführungsbeispiel auf eine ihm als geeignet erscheinende Weise abzuwandeln, um es an einen konkreten Anwendungsfall anzupassen.

## Patentansprüche

1. Achsanordnung (2) mit einer Reifendruckregelanlage, deren Versorgungsleitung für die Druckluftversorgung durch eine im Inneren eines starren Achskörpers ausgebildete Druckluftleitung verläuft, **dadurch gekennzeichnet, dass** der Achskörper als ein in einer schwingenseitigen Achsaufnahme mit einer Achsschwinge (4) drehfest verpresster Achsstummel (6) ausgebildet ist, in der Achsschwinge (4) und im Achsstummel (6) jeweilige in der Montageposition des Achsstummels (6) in der Achsaufnahme (20) miteinander verbundene Bohrungen (12, 14) vorhanden sind, die als eine Druckluftzuleitung durch den Achskörper hindurch von einem schwingenseitigen Anschluss (8) bis zu einer Mündungsöffnung (16) im Achsstummel (6) dienen, wobei der Verbindungsbereich der Bohrungen (12, 14) als eine in der Höhe der Mündungsöffnungen (16) der Bohrungen (12, 14) befindliche und sich zumindest teilweise in Umfangsrichtung um den Außenumfang des Achsstummels (6) erstreckende Nut (18) ausgebildet ist, die die Mündungsöffnungen (16) der Bohrungen (12, 14) in der Achsschwinge (4) und im Achsstummel (6) miteinander verbindet.

2. Achsanordnung (2) nach Anspruch 1, **dadurch gekennzeichnet, dass** sich die Nut (18) in der nach innen weisenden Oberfläche der Achsaufnahme (20) und/oder in der nach außen weisenden Umfangsfläche des Achsstummels (6) befindet.

3. Achsanordnung (2) nach Anspruch 1 oder 2, **dadurch gekennzeichnet, dass** die Nut (18) als umlaufende Ringnut ausgebildet ist.

4. Achsanordnung (2) nach einem der vorgehenden Ansprüche, **dadurch gekennzeichnet, dass** die Bohrung (14) im Achsstummel (6) in einem ersten Abschnitt parallel zur axialen Richtung des Achsstummels (6) und in einem zweiten Abschnitt quer zur axialen Richtung verläuft, wobei das zuströmungsseitige Ende des zweiten Abschnitts in der Nut (18) mündet.

5. Achsanordnung (2) nach Anspruch 4, **dadurch gekennzeichnet, dass** der zweite Abschnitt der Bohrung (14) außerhalb der Lastzone des Achsstummels (6) angeordnet ist.

6. Achsanordnung (2) nach einem der vorgehenden Ansprüche, **dadurch gekennzeichnet, dass** in der Achsaufnahme (20) und/oder dem Achsstummel (6) ein stufenförmiger Absatz (22) ausgebildet ist, gegen den der Achsstummel (6) in der Achsaufnahme (20) verpresst ist.

7. Achsanordnung (2) nach einem der vorgehenden Ansprüche, **dadurch gekennzeichnet, dass** die Achsanordnung (2) gemäß einem der vorstehenden Ansprüche Bestandteil einer Trailerachse ist.

## Claims

1. Axle assembly (2) with a tyre pressure control system, whose supply line for supplying compressed air runs through a compressed air line formed inside a rigid axle body, **characterised in that** the axle body is formed as an axle stub (6) pressed non-rotatably in an axle mount on the rocker side with an axle rocker (4), respective bores (12, 14) connected with each other are present in the axle rocker (4) and in the axle stub (6) in the assembly position of the axle stub (6) in the axle mount (20), which serve as a compressed air feed line through the axle body from a connection (8) on the rocker side to a mouth opening (16) in the axle stub (6), wherein the connection area of the bores (12, 14) is formed as a groove (18) present at the height of the mouth openings (16) of the bores (12, 14) and extending at least partly in the circumferential direction around the outside circumference of the axle stub (6), which connects the mouth openings (16) of the bores (12, 14) in the axle rocker (4) and in the axle stub (6).

2. Axle assembly (2) according to claim 1, **characterised in that** the groove (18) is located in the surface of the axle mount (20) pointing inwards and/or in the circumferential surface of the axle stub (6) pointing outwards.

3. Axle assembly (2) according to claim 1 or 2, **characterised in that** the groove (18) is formed as a circumferential annular groove.

4. Axle assembly (2) according to any one of the preceding claims, **characterised in that** the bore (14) in the axle stub (6) in a first section runs parallel to the axial direction of the axle stub (6) and in a second section runs transversely to the axial direction, wherein the end of the second section on the inflow side opens in the groove (18).

5. Axle assembly (2) according to claim 4, **characterised in that** the second section of the bore (14) is positioned outside the load zone of the axle stub (6).

6. Axle assembly (2) according to any one of the preceding claims, **characterised in that** in the axle mount (20) and/or the axle stub (6) a step-shaped shoulder (22) is formed, against which the axle stub (6) is pressed in the axle mount (20).

7. Axle assembly (2) according to any one of the preceding claims, **characterised in that** the axle assembly (2) according to any one of the preceding claims is part of a trailer axle.

## Revendications

1. Agencement d'essieu (2) comprenant une installation de réglage de pression de pneus, dont la conduite d'alimentation en air comprimé s'étend à travers une conduite d'air comprimé réalisée à l'intérieur d'un corps d'essieu rigide, **caractérisé en ce que** le corps d'essieu est réalisé sous la forme d'un bout d'essieu (6) pressé de manière fixe en rotation avec un bras oscillant (4) dans un logement d'essieu côté oscillations, des perçages (12, 14) reliés l'un à l'autre dans le bras oscillant (4) et dans le bout d'essieu (6) respectivement dans la position de montage du bout d'essieu (6) dans le logement d'essieu (20) sont présents et servent d'amenée d'air comprimé à travers le corps d'essieu depuis un raccord côté oscillations (8) jusqu'à une ouverture (16) dans le bout d'essieu (6), dans lequel la zone de liaison des perçages (12, 14) est réalisée sous la forme d'une rainure (18) qui se trouve à hauteur des ouvertures (16) des perçages (12, 14) et s'étend autour de la périphérie extérieure au moins en partie dans la direction circonférentielle du bout d'essieu (6), et qui relie l'une à l'autre les ouvertures (16) des perçages (12, 14) dans le bras oscillant (4) et dans le bout d'essieu (6).

2. Agencement d'essieu (2) selon la revendication 1, **caractérisé en ce que** la rainure (18) se trouve dans la surface du logement d'essieu (20) tournée vers l'intérieur et/ou dans la surface périphérique du bout d'essieu (6) tournée vers l'extérieur.

3. Agencement d'essieu (2) selon la revendication 1 ou 2, **caractérisé en ce que** la rainure (18) est réalisée sous la forme d'une rainure annulaire périphérique.

4. Agencement d'essieu (2) selon une des revendications précédentes, **caractérisé en ce que** l'alésage (14) dans le bout d'essieu (6) s'étend dans une première partie parallèlement à la direction axiale du bout d'essieu (6) et dans une seconde partie transversalement à la direction axiale, l'extrémité du côté de l'alimentation de la seconde partie débouchant dans la rainure (18) .

5. Agencement d'essieu (2) selon la revendication 4, **caractérisé en ce que** la seconde partie de l'alésage (14) est disposée à l'extérieur de la zone de charge du bout d'essieu (6).

6. Agencement d'essieu (2) selon une des revendications précédentes, **caractérisé en ce que**, dans le logement d'essieu (20) et/ou le bout d'essieu (6), est réalisé un épaulement étagé (22) contre lequel le bout d'essieu (6) est pressé dans le logement d'essieu (20).

7. Agencement d'essieu (2) selon une des revendications précédentes, **caractérisé en ce que** l'agencement d'essieu (2) selon une des revendications précédentes fait partie d'un essieu de remorque.
